(19) Europäisches Patentamt
European Patent Office
Office européen des brevets

(11) **EP 4 519 741 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **23722378.9**

(22) Anmeldetag: **28.04.2023**

(51) Internationale Patentklassifikation (IPC):
**G05B 19/401** *(2006.01)* **H02K 41/02** *(2006.01)*
**H02K 41/03** *(2006.01)* **H02P 6/00** *(2016.01)*

(52) Gemeinsame Patentklassifikation (CPC):
**G05B 19/401; H02P 6/006**

(86) Internationale Anmeldenummer:
**PCT/EP2023/061219**

(87) Internationale Veröffentlichungsnummer:
**WO 2023/213701 (09.11.2023 Gazette 2023/45)**

(54) **VERFAHREN UND VORRICHTUNG ZUM ÜBERWACHEN DES BETRIEBS EINER TRANSPORTEINRICHTUNG**

METHOD AND DEVICE FOR MONITORING THE OPERATION OF A TRANSPORT DEVICE

PROCÉDÉ ET DISPOSITIF PERMETTANT DE SURVEILLER LE FONCTIONNEMENT D'UN DISPOSITIF DE TRANSPORT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.05.2022 AT 502972022**

(43) Veröffentlichungstag der Anmeldung:
**12.03.2025 Patentblatt 2025/11**

(73) Patentinhaber: **ABB Schweiz AG**
**5400 Baden (CH)**

(72) Erfinder:
• WEBER, Andreas
5142 Eggelsberg (AT)
• BRUCKER, Stefan
5142 Eggelsberg (AT)

(74) Vertreter: **Patentanwälte Pinter & Weiss OG**
**Prinz-Eugen-Straße 70**
**1040 Wien (AT)**

(56) Entgegenhaltungen:
**EP-A1- 3 422 562 DE-A1- 102015 102 236**

# Beschreibung

## Technisches Gebiet

Die gegenständliche Erfindung betrifft allgemein das Gebiet des Anlagenbaus, insbesondere den Bereich der Automatisierungstechnik. Im Speziellen bezieht sich die vorliegende Erfindung auf ein Verfahren zum Überwachen eines Betriebs einer Transporteinrichtung in Form eines Langstatorlinearmotors mit einer Transportstrecke, entlang welcher eine Vielzahl an Antriebsspulen angeordnet ist. Dabei wird zumindest eine Transporteinheit entlang der Transportstrecke bewegt, wobei Antriebsmagnete der Transporteinheit für ein Erzeugen einer Vortriebskraft mit den Antriebsspulen der Transportstrecke zusammenwirken. Weiterhin bezieht sich die Erfindung auf eine Vorrichtung zum Überwachen des Betriebs einer Transporteinrichtung in Form eines Langstatorlinearmotors.

## Stand der Technik

Heutzutage ist es in den meisten modernen Produktionsanlagen erforderlich, Bauteile oder Komponenten - teilweise auch über längere Transportstrecken hinweg - mit Transporteinrichtungen zwischen den einzelnen Handhabungs- oder Produktionsstationen zu bewegen. Für diesen Transport können unterschiedliche Transport- und Fördereinrichtungen eingesetzt werden, wie z.B. Stetigförderer bzw. Förderbänder in verschiedenen Ausführungen, bei welchen eine Drehbewegung eines elektrischen Antriebs in eine lineare Bewegung umgesetzt wird. Mit derartigen Stetigförderern ist allerdings die Flexibilität erheblich eingeschränkt, vor allem ein individueller Transport von einzelnen Transporteinheiten ist nicht möglich.

Um den Anforderungen von modernen und flexiblen Transporteinrichtungen gerecht zu werden, werden immer häufiger so genannte Langstatorlinearmotoren oder kurz: LLM in Transporteinrichtungen eingesetzt. Dabei werden unter Langstatorlinearmotoren ausdrücklich lineare Langstatorlinearmotoren mit Bewegungen in einer Bewegungsrichtung, und auch planare Langstatorlinearmotoren mit Bewegungen in einer Bewegungsebene, welche häufig auch als Planarmotoren bezeichnet werden, verstanden.

Bei einem linearen Langstatorlinearmotor ist beispielsweise eine Vielzahl von elektrischen Antriebsspulen, die den Stator bilden, nebeneinander entlang einer Transportstrecke bzw. Bewegungsbahn meist ortsfest angeordnet. Auf einer Transporteinheit ist eine Anzahl von Antriebsmagneten angeordnet. Die Antriebsmagnete können dabei entweder als Permanentmagnete oder als elektrische Spule oder Kurzschlusswicklung ausgeführt sein. Von den Antriebsmagneten der Transporteinheit wird eine magnetisches Erregungsfeld erzeugt, welches mit einem elektro-magnetischen Feld der Antriebsspulen des Stators zusammenwirkt. Durch entsprechende Ansteuerung der einzelnen Antriebsspulen im Bereich der Transporteinheit zur Regelung des magnetischen Flusses wird eine Vortriebskraft auf die Transporteinheit erzeugt bzw. eine Größe der Vortriebskraft beeinflusst, um die Transporteinheit in gewünschter Weise entlang der Transportstrecke zu bewegen. Dabei ist es auch möglich, bei einem linearen Langstatorlinearmotor entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen - in der Regel durch Anlegen einer elektrischen Spannung - bestromt werden. Beispiele für lineare Langstatorlinearmotoren sind beispielsweise aus der WO 2013/143783 A1, der US 6,876,107 B2, der US 2013/0074724 A1 oder der WO 2004/103792 A1 bekannt.

In Transporteinrichtungen können beispielsweise auch Planarmotoren zum Einsatz kommen, um sehr flexible Transportprozesse mit komplexem Bewegungsprofilen zu realisieren. Beim Einsatz eines Planarmotors in einer Transporteinrichtung ist eine Vielzahl an elektrischen Antriebsspulen, welche den Stator bilden, z.B. in einer Bewegungsebene angeordnet. Von den in der Bewegungsebene angeordnete Antriebsspulen wird ein Magnetfeld erzeugt, welcher in der Bewegungsebene in zwei Dimensionen (z.B. xy-Ebene) bewegt werden kann. Die auf der Transporteinheit angeordneten Antriebsmagnete können ebenfalls zweidimensional verteilt angeordnet sein, um mit dem Magnetfeld der Antriebsspulen zusammenzuwirken und die Transporteinheit in der Transportebenen auf einer durch das Magnetfeld vorgebbaren Bewegungsbahn bzw. Transportstrecke zu bewegen. Durch entsprechende Anordnung von Antriebsspulen in der Bewegungsebene und der Antriebsmagneten an der jeweiligen Transporteinheit sind z.B. neben einer eindimensionalen Bewegung in der Transportebene (z.B. entlang den von der Transportebene aufgespannten Achsen - z.B. x- und y-Achse in einer xy-Ebene) auch komplexere zweidimensionale Bewegungen in der Transportebene als Bewegungsbahn bzw. Transportstrecke einer Transporteinheit möglich. Die Funktionsweise und der Aufbau von Planarmotoren ist grundsätzlich bekannt und kann beispielsweise der Schrift US 9,202,719 B2 oder der Schrift WO 2021/105155 A1 entnommen werden.

Langstatorlinearmotoren können als Synchronmaschinen, sowohl selbsterregt oder fremderregt, oder als Asynchronmaschinen ausgeführt sein. Ein Langstatorlinearmotor zeichnet sich insbesondere durch eine bessere und flexiblere Ausnützung über den gesamten Arbeitsbereich der Bewegung (Position, Geschwindigkeit, Beschleunigung) aus. Weiterhin erfolgt eine Regelung/Steuerung der Transporteinheiten entlang der Transportstrecke bzw. Bewegungsbahn individuell. Langstatorlinearmotoren weisen außerdem eine verbesserte Energieausnützung, reduzierte Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke bzw. Bewegungsbahn auf.

Ein Langstatorlinearmotor stellt hohe Anforderungen an die Regelung der Bewegung der Transporteinheiten. Hierzu sind üblicherweise eine Vielzahl an Reglern vorgesehen, welche die Bestromung der Antriebsspulen regeln, um die Transporteinheiten wie vorgesehen entlang der Transportstrecke bzw. Bewegungsbahn zu bewegen. Besonders wichtig für die Bewegung einer jeweiligen Transporteinheit ist bei einem Langstatorlinearmotor - sowohl bei einem linearen Langstatorlinearmotor als auch bei einem Planarmotor - ein Zusammenwirken der Antriebsmagnete der Transporteinheit mit den Antriebsspulen, durch welche die Transportstrecke vorgegeben wird. Dabei sind die Antriebsspulen und die Transporteinheit durch einen Spalt - einem so genannten Luftspalt - voneinander beabstandet. Die Antriebsmagnete der Transporteinheit und die Antriebsspulen der Transportstrecke sind magnetische Spannungsquellen. Neben der magnetischen Spannung wird das Zusammenwirken von Transporteinheit und Transportstrecke auch durch einen magnetischen Widerstand bestimmt, der maßgebend durch den Luftspalt bzw. insbesondere durch die Größe des Spalts und durch die magnetische Permeabilität der Luft im Spalt bestimmt ist. Die Höhe der, von den magnetischen Spannungsquellen erzeugten magnetischen Spannungen sowie die Größe des magnetischen Widerstandes bestimmen unmittelbar die elektromagnetischen Eigenschaften des Langstatorlinearmotors. Die Größe des Luftspalts ist in der Regel durch den Aufbau eines Langstatorlinearmotors fest vorgegeben, beispielsweise durch den konstruktiven Aufbau des Langstatorlinearmotors, und wird im Betrieb vorzugsweise nicht geändert. Die magnetische Permeabilität der Luft im Luftspalt ist eine konstante physikalische Größe. Die magnetische Spannung der Antriebsmagnete ist üblicherweise fest vorgegeben, da diese in der Regel als Permanentmagnete ausgeführt sind, und während des Betriebs der Transporteinrichtung unveränderlich. Die magnetische Spannung der Antriebsspulen wird durch die an den Antriebsspulen angelegte, elektrische Spannung definiert, deren Höhe üblicherweise von der Regelungseinheit der Transporteinrichtung bestimmt wird.

Allerdings können sich bereits kleine Veränderungen der magnetischen Größen im Zusammenwirken zwischen den Antriebsmagneten der Transporteinheit und den Antriebsspulen der Transssportstrecke, z.B. eine Veränderung des magnetischen Widerstands durch Veränderung der Größe des Luftspalts beispielsweise aufgrund von Verschleißzuständen, unterschiedlicher Beladung von Transporteinheiten, fehlerhafte Führung einer Transporteinheit, Magnetabhebungen oder Montagefehler bei der der Transporteinheit und/oder der Transportstrecke, etc. auf den Betrieb der Transporteinrichtung in Form eines Langstatorlinearmotors auswirken.

Vor allem bei Transporteinrichtungen, welche für eine komplexe und flexible Transportstreckenplanung und -realisierung aus mehreren Transportsegmenten mit Übergabepositionen, z.B. in Form von Weichen, bestehen, kann es beispielsweise durch Veränderungen der Größe des Luftspalt zu Fehlfunktionen vor allem bei den Übergabepositionen kommen.

Um einen sicheren Betrieb von Transporteinrichtungen zu gewährleisten und z.B. Bewegungen, welche ein Sicherheitsrisiko darstellen, zu verhindern, ist z.B. aus der Schrift DE 10 2015 102 236 A1 ein Steuerungssystem für einen elektrischen Motor, insbesondere für einen Linearmotor, bekannt, welches eine Positionserfassungseinrichtung zum Erfassen der Positionen der Transporteinheiten entlang des Stators und eine Spulenüberwachungseinrichtung, welche Spulendaten erzeugt, die den Status einer oder mehrerer Antriebsspulen des Stators repräsentieren. Weiterhin ist eine Sicherheitseinrichtung vorgesehen, welche die Positions- und Spulendaten abgleicht und bei festgestellten Fehlern im Datenabgleich den Motor in einen sicheren Betrieb überführt. Durch dieses Steuerungssystem können zwar Fehler bzw. Fehlfunktionen, wie z.B. abweichende Positionen von Transporteinheiten, erkannt werden, aber Veränderungen der magnetischen Größen im Zusammenwirken zwischen den Antriebsmagneten der Transporteinheit werden durch das Steuerungssystem nicht erkannt.

Aus der Schrift WO 2019/238276 A1 ist daher ein Verfahren zur Verschleißüberwachung eines Langstatorlinearmotors sowie eine zugehörige Vorrichtung bekannt. Dabei wird während des Betriebs des Langstatorlinearmotors mit Hilfe einer Messeinrichtung beispielsweise eine Kraft oder Differenzkraft gemessen, welche von der Transporteinheit auf einen Stator eine Motorstrangs bzw. auf die Transportstrecke ausgeübt wird, wie z.B. eine Zugkraft zwischen einem Rahme und dem Stator der Transporteinrichtung oder eine Druckkraft von Führungseinheiten (z.B. Laufrollen) der Transporteinheiten auf Führungsschienen. Die gemessene Kraft oder Differenzkraft wird dann mit einem zulässigen Maximalwert verglichen, um Rückschlüsse auf eine Größe des Luftspalts zwischen dem Stator und der Transporteinheit, insbesondere einer Magneteinheit an der Transporteinheit, ziehen zu können. Eine derartige Verschleißüberwachung weist allerdings den Nachteil auf, dass für eine Verschleißüberwachung zusätzlich Sensoren (z.B. Messdosen) am Langstatorlinearmotor angeordnet werden müssen, wobei eine Genauigkeit, mit welcher auf eine Größe des Luftspalts geschlossen werden kann, von der Anbringung und Messgenauigkeit der Sensoren abhängt.

Alternativ ist aus der Schrift WO 2019/238276 A1 auch ein Verfahren bekannt, bei welchem eine Spannung gemessen wird, welche von den Antriebsmagneten in wenigstens einer Spulenwicklung des Stators des Langstatorlinearmotors induziert wird. Diese Spannung wird dann zum Abschätzen der Größe des Luftspalts verwendet. Dazu werden aus Positions- und Geschwindigkeitsinformationen der Transporteinheit sowie einem Steuerverhalten der Stator-Steuerelektronik Werte einer nominell induzierten Spannung für unterschiedliche Luftspaltgrößen berechnet. Diese berechneten Werte werden dann mit der gemessenen, induzierten Spannung verglichen, um daraus eine tatsächliche Größe des Luftspalts zu ermitteln. Auch bei dieser Ausführungsform wird eine zusätzliche Messvorrichtung eingesetzt, von welcher die induzierte Spannung in der Spulenwicklung gemessen wird. Weiterhin kann es bei der Messung der in der Spulenwicklung induzierten Spannung aufgrund von Störgrößen (z.B. Widerstand und/oder Induktivität der Spulenwicklung), welche sich üblicherweise im laufenden Betrieb des Langstatorlinearmotors laufend ändern können, zu Ungenauigkeiten und/oder fehlerhaften Abschätzungen des Luftspalts kommen.

***Darstellung der Erfindung***

Der Erfindung liegt daher die Aufgabe zugrunde, ein Verfahren sowie eine Vorrichtung anzugeben, mit welchen es möglich ist, während eines Testbetriebs und/oder eines laufenden Betriebs einer Transporteinrichtung in Form eines Langstatorlinearmotors ohne großen Aufwand Montagefehler, Verschleißerscheinungen und/oder weitere Fehlfunktionen rasch und mit hoher Genauigkeit zu erkennen.

Diese Aufgabe wird durch ein Verfahren sowie eine Vorrichtung zum Überwachen eines Betriebs einer Transporteinrichtung in Form eines Langstatorlinearmotors gemäß den unabhängigen Ansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art zum Überwachen eines Betriebs einer Transporteinrichtung in Form eines Langstatorlinearmotors, bei welchem zumindest eine Antriebsspule, welche mit einer Vielzahl an Antriebsspulen entlang einer Transportstrecke der Transporteinrichtung angeordnet ist, als Messspule ausgewählt wird. Dann wird während einer Bewegung zumindest einer Transporteinheit, welche entlang der Transportstrecke bewegt wird, über die Messspule der Messspule als Regelstrecke eine Stellgröße als Anregesignal derart vorgegeben, dass ein jeweils aktueller Spulenstrom in der Messspule auf einen vorgegebenen Sollwert geregelt wird. Weiterhin wird während die zumindest eine Transporteinheit über die Messspule bewegt wird, ein zeitlicher Verlauf der Stellgröße erfasst und dann der erfasste, zeitliche Verlauf der Stellgröße für eine Überwachung der Transporteinrichtung ausgewertet.

Der Hauptaspekt der vorgeschlagenen Lösung besteht darin, dass auf einfache Weise z.B. während eines Testbetriebs und/oder während des laufenden Betriebs der Transporteinrichtung Montagefehler, Verschleißerscheinungen und/oder weitere Fehlfunktionen rasch und mit hoher Genauigkeit erkannt werden. Durch Auswertung des zeitlichen Verlaufs der Stellgröße, aus welchem ein Verlauf der der in der als Messspule gewählten Antriebsspule während der Überfahrt der Transporteinheit induzierten Spannung ermittelt werden kann, können beispielsweise eine Breite eines Luftspalt zwischen den Antriebsspulen der Transportstrecke und den Antriebsmagneten der Transporteinheit und/oder eine Normalkraft ermittelt werden, mit welcher die Antriebsmagnete der Transporteinheit auf die Oberfläche der Transportstrecke wirken. Weiterhin können dann z.B. mittels Vergleichs mit vorab bekannten Erwartungswerten für den Verlauf der Stellgröße Rückschlüsse auf Verschleißerscheinungen an der Transporteinheit (z.B. an Führungselementen, etc.), Montagefehler bei der Transportstrecke (z.B. fehlerhaft eingebaute Antriebsspulen, etc.) und/oder der Anbringung der Antriebsmagnete (z.B. Verschiebung, Verdrehung, Ablösung, etc.), etc. gezogen werden bzw. diese sehr rasch entdeckt werden.

Es ist dabei günstig, wenn als Sollwert, auf welchen der jeweils aktuelle Spulenstrom in der Messspule geregelt wird, ein Wert von Null vorgegeben wird. Bei einem vorgegebenen Sollwert von Null kann aus dem erfassten, zeitlichen Verlauf der Stellgröße sehr einfach der zeitliche Verlauf jener Spannung ermittelt werden, welcher während der Bewegung der Transporteinheit in der als Messspule ausgewählten Antriebsspule induziert wird. Idealerweise entspricht der erfasste, zeitliche Verlauf der Stellgröße dem zeitlichen Verlauf der induzierten Spannung.

Es ist weiterhin von Vorteil, wenn ein Antriebsregler, welcher der als Messspule ausgewählten Antriebsspule zugeordnet ist, für eine Vorgabe der Stellgröße als Anregesignal eingesetzt wird. Dadurch wird auf sehr einfache Weise bereits vorhandene Hardware der Transporteinrichtung zusätzlich genutzt. Der Antriebsregler der als Messspule ausgewählten Antriebsspule kann beispielsweise für die Durchführung des erfindungsgemäßen Verfahrens sehr einfach softwaretechnisch erweitert werden und damit als Regeleinheit für das Verfahren genutzt werden.

Zweckmäßigerweise kann bei einer Transportstrecke mit zwei oder mehreren Transportsegmenten in jedem Transportsegment zumindest einen Antriebsspule des jeweiligen Transportsegments als Messspule ausgewählt werden. Dadurch können durch entsprechende Auswahl von Antriebsspulen als Messspulen einzelne Transportsegmente der Transportstrecke sehr einfach auf z.B. Montagefehler überprüft werden.

Eine bevorzugte Ausgestaltung der Erfindung sieht vor, dass die zumindest eine Antriebsspule der Transportstrecke, welche als Messspule ausgewählt wurde, zeitlich begrenzt als Messspule ausgewählt wird. Idealerweise fungiert die als Messspule ausgewählte Antriebsspule nur für eine Dauer eines Messzyklus - d.h. für die Dauer einer Überfahrt einer Transporteinheit - als Messspule. Dadurch wird eine Verwendung einer Antriebsspule als Messspule möglichst kurzgehalten.

Dies ist insbesondere günstig, wenn der Spulenstrom auf einen vorgegebenen Sollwert von Null geregelt wird und die als Messspule gewählte Antriebsspule während der Nutzung als Messspule für eine Regelung zur Bildung einer Vortriebskraft ausfällt. Es ist aber auch möglich, dass eine Antriebsspule z.B. für zwei oder mehrere Messzyklen als Messspule fungiert und erst dann wieder nur als Antriebsspule genutzt wird. Alternativ kann es aber auch vorteilhaft sein, wenn die zumindest eine Antriebsspule der Transportstrecke dauerhaft als Messspule ausgewählt wird.

Es ist weiterhin günstig, wenn ein Beobachtungszeitraum vorgegeben wird, in welchem der zeitliche Verlauf der Stellgröße erfasst wird. Der vorgegebene Beobachtungsraum kann beispielsweise von einem Messzyklus (d.h. Erfassen der Stellgröße während einer Überfahrt der Transporteinheit über die Messspule) über ein oder mehrere Tage und ein oder mehrere Monate bis zu einer gesamten Lebens- bzw. Einsatzdauer der Transporteinrichtung reichen.

Weiterhin kann es zweckmäßig sein, wenn der zeitliche Verlauf der Stellgröße in sich zyklisch wiederholenden Abständen erfasst wird. Dabei kann das Verfahren zum Überwachen des Betriebs der Transporteinrichtung während des Beobachtungszeit wiederholt z.B. mehrmals täglich, täglich, wöchentlich, etc. je nach Anwendung der Transporteinrichtung durchgeführt werden, um Verschleiß, Fehler, etc. beispielsweise sehr rasch durch Vergleich der jeweils erfassten, zeitlichen Verläufe der Stellgröße erkennen zu können.

Idealerweise wird aus dem erfassten, zeitlichen Verlauf der Stellgröße für eine Auswertung ein zeitlicher Verlauf eines magnetischen Flusses abgeleitet. Der zeitliche Verlauf des magnetischen Flusses kann z.B. mittels Integration aus dem zeitlichen Verlauf der in der Messspule induzierte Spannung, welche aus dem erfassten, zeitlichen Verlauf der Stellgröße ableitbar ist, abgeleitet werden. Durch Vermessung des zeitlichen Verlaufs des magnetischen Flusses und durch Vergleich mit vorab bekannten Erwartungswerten von charakteristischen Eigenschaften (z.B. Positionen von Minima, Maxima und/oder Nulldurchgängen, Amplitudenabständen, etc.) des Verlaufs können beispielsweise Informationen über die Antriebsmagneten (z.B. Material, Stärke, Polung, etc.) der Transporteinheit gewonnen werden. Diese Informationen können idealerweise genutzt werden, um z.B. eine Selektion der Transporteinheiten durchzuführen oder im laufenden Betrieb fehlerhafte Veränderungen der Antriebsmagnete (z.B. Ablösen eines Magneten, Verschiebung eines Magneten, etc.) zu erkennen.

Weiterhin ist es vorteilhaft, wenn der erfasste, zeitliche Verlauf der Stellgröße auf eine Nenngeschwindigkeit der zumindest einen Transporteinheit normiert wird. Dadurch können beispielsweise erfasste, zeitliche Verläufe einfacher verglichen werden, wenn z.B. durch zyklisch Wiederholung des Verfahrens Veränderungen (z.B. Verschleiß, etc.) an der Transporteinheit und/oder Transportstrecke erkannt werden sollen.

Weiterhin erfolgt die Lösung der genannten Aufgabe durch eine Vorrichtung zum Überwachen des Betriebs einer Transporteinrichtung in Form eines Langstatorlinearmotors mit einer Transportstrecke, entlang welcher eine Vielzahl an Antriebsspulen angeordnet sind. Die Transporteinrichtung weist außerdem zumindest eine Transporteinheit auf, welche entlang der Transportstrecke bewegbar ist, wobei Antriebsmagnete der zumindest einen Transporteinheit zur Erzeugung einer Vortriebskraft mit den Antriebsspulen der Transportstrecke zusammenwirken. Diese Vorrichtung weist dabei zumindest eine Messspule, welche aus der Vielzahl der entlang der Transportstrecke angeordneten Antriebsspulen auswählbar ist, sowie eine Regeleinheit, welche dazu eingerichtet ist, der Messspule eine Stellgröße als Anregesignal derart vorzugeben, dass der jeweils aktuelle Spulenstrom in der Messspule auf einen vorgegebenen Sollwert geregelt wird. Weiterhin weist die Vorrichtung eine Einheit zum Erfassen eines zeitlichen Verlaufs der Stellgröße und eine Einheit zum Auswerten des erfassten, zeitlichen Verlaufs der Stellgröße auf.

Als Regeleinheit kann beispielsweise ein eigner Regler verwendet werden. Idealerweise ist aber ein Antriebsregler, welcher der als Messspule ausgewählten Antriebsspule zugeordnet ist, als Regeleinheit einsetzbar. Dadurch wird auf einfache Weise vermieden, dass eine weitere bzw. zusätzliche Hardware-Einheit in der Transporteinrichtung vorgesehen bzw. installiert werden muss.

Um idealerweise einen Hardware-Aufwand weiter zu reduzieren, kann auch die Einheit zum Erfassen des zeitlichen Verlaufs der Stellgröße in die Regeleinheit - insbesondere in den Antriebsregler der als Messspule ausgewählten Antriebsspule integriert sein. Damit wird ohne zusätzliches Equipment von der Regeleinheit sowohl der Spulenstrom in der Messspule auf den vorgegebenen Sollwert geregelt als auch der zeitliche Verlauf der Stellgröße während der Regelung für die Auswertung erfasst.

Weiterhin ist es von Vorteil, wenn die Einheit zum Auswerten des zeitlichen Verlaufs der Stellgröße dazu eingerichtet ist, einen zeitlichen Verlauf eines magnetischen Flusses aus dem erfassten Verlauf der Stellgröße abzuleiten. Idealerweise kann ein zeitlicher Verlauf der in der als Messspule ausgewählten Antriebsspule induzierten Spannung aus dem erfassten, zeitlichen Verlauf der Stellgröße von der Einheit zum Erfassen des zeitlichen Verlaufs der Stellgröße oder von der Einheit zum Auswerten des zeitlichen Verlaufs der Stellgröße ermittelt werden.

### Kurzbeschreibung der Zeichnungen

Die gegenständliche Erfindung wird nachfolgend unter Bezugnahme auf die Figuren 1 bis 5a bzw. 5b näher erläutert, die beispielhaft, schematisch und nicht einschränkend vorteilhafte Ausgestaltungen der Erfindung zeigen. Dabei zeigt

Fig. 1 eine Ausgestaltung einer Transporteinrichtung in Form eines Langstatorlinearmotors,

Fig. 2 eine Detailansicht des Aufbaus eines Transportsegmente und einer Transporteinheit,

Fig. 3 eine Ausführungsvariante des Verfahrens zum Überwachen eines Betriebs einer Transporteinrichtung mit einer zugehörigen Vorrichtung

Fig. 4 ein vereinfachtes Ersatzschaltbild der Messspule

Fig. 5a einen zeitlichen Verlauf einer erfassten Stellgröße in Abhängigkeit von einer Position der Transporteinheit,

Fig. 5b einen zeitlichen Verlauf eines magnetischen Flusses in Abhängigkeit von einer Position der Transporteinheit.

### Ausführung der Erfindung

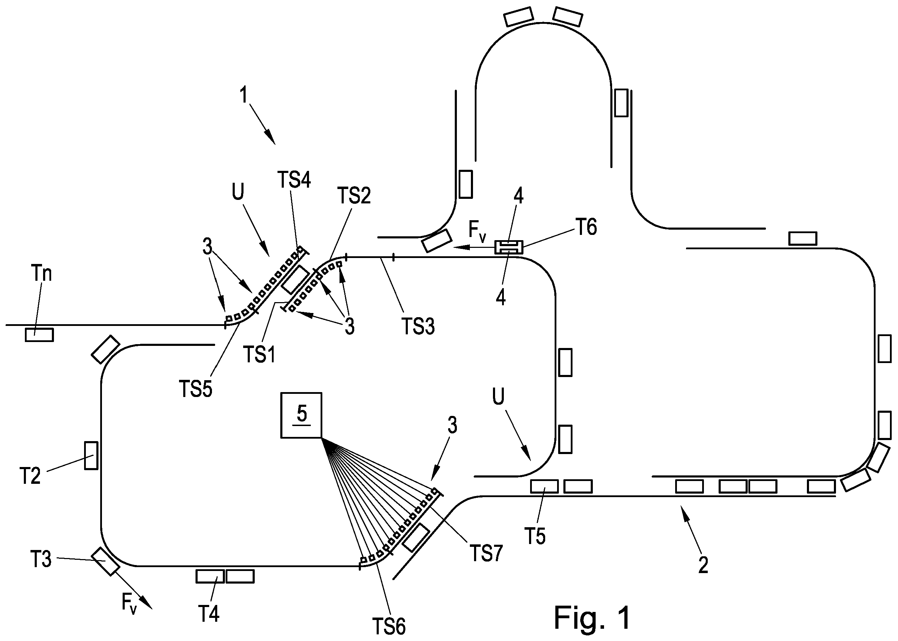

In Figur 1 ist eine Transporteinrichtung 1 in Form eines Langstatorlinearmotors, beispielsweise eines linearen Langstatorlinearmotors, beispielhaft dargestellt. Die Transporteinrichtung 1 besteht aus einer Anzahl von Transportsegmenten TSk (k≥1 ist hierbei ein Index, der für alle vorhandenen Transportsegmente TS1, TS2, TS3, ..., TS7 steht), von denen aus Gründen der Übersichtlichkeit beispielhaft nur die Transportsegmente TS1, ..., TS7 bezeichnet sind. Ein Transportsegment TSk ist jeweils an einer Seite der Transportstrecke 2 - beispielsweise an einer nicht dargestellten Stützkonstruktion - angeordnet. Die Transportsegmente TSk bilden verschiedene Streckenabschnitte der Transportstrecke 2, beispielsweise Geraden, Kurven mit unterschiedlichen Winkeln und Radien, Weichen, usw., aus und können sehr flexibel zur Transportstrecke 2 zusammengesetzt werden.

Die Transportsegmente TSk bilden zusammen die zumeist ortsfeste Transportstrecke 2, entlang welcher die Transporteinheiten Tn (n≥1 ist hierbei ein Index, der für alle vorhandenen Transporteinheiten T1, T2, T3, T4, ... steht, wobei aus Gründen der Übersichtlichkeit nicht alle Transporteinheiten Tn in der Figur 1 mit Bezugszeichen gekennzeichnet sind) bewegt werden können. Aufgrund eines derartigen modularen Aufbaus kann die Transporteinrichtung 1 bzw. die Transportstrecke 2 sehr flexibel gestaltet werden, bedingt aber auch eine Vielzahl von Übergabepositionen U, wie z.B. Weichen, etc., an welchen die auf der Transporteinrichtung 1 bewegten Transporteinheiten Tn von einem Transportsegment TSk auf ein anderes übergeben werden.

Die Transporteinrichtung 1 ist als Langstatorlinearmotor ausgeführt, bei welchem die Transportsegmente TSk in an sich bekannter Weise jeweils einen Teil eines Langstators des Langstatorlinearmotors ausbilden. Entlang der Transportsegmente TSk sind daher in Längsrichtung in bekannter Weise eine Vielzahl an den Stator ausbildenden, ortsfest angeordnete elektrischen Antriebsspulen 3 angeordnet (in Fig.1 aus Gründen der Übersichtlichkeit nur für die Transportsegmente TS1, TS2, TS4, TS5, TS6, TS7 angedeutet).

Die Antriebsspulen 3 können mit Antriebsmagneten 4 an den Transporteinheiten T1, ..., Tn (in Fig.1 aus Gründen der Übersichtlichkeit nur für die Transporteinheit T6 angedeutet) zur Erzeugung einer Vortriebskraft Fv zusammenwirken. Die Antriebsspulen 3 werden in hinlänglich bekannter Weise durch eine Regelungseinheit bzw. einen Antriebsregler 5 angesteuert (in Fig.1 nur angedeutet), um die für die gewünschte Bewegung der Transporteinheiten Tn benötigten Spulenspannungen anzulegen.

Es kann entlang der Transportstrecke 2 auch Streckenabschnitte, wie z.B. Übergabepositionen U, etc. geben, an denen beidseitig Transportsegmente TSk angeordnet sind, zwischen denen eine Transporteinheit Tn bewegt wird (beispielsweise die Transportsegmente TS1, TS4). Wenn die Transporteinheit Tn an beiden Seiten (in Bewegungsrichtung gesehen) mit Antriebsmagneten 4 ausgestattet ist, dann kann die Transporteinheit Tn auch gleichzeitig mit den beidseitig angeordneten Transportsegmenten TSk bzw. mit dessen Antriebsspulen 3, zusammenwirken. Damit kann natürlich in Summe auch eine größere Vortriebskraft $F_V$ erzeugt werden.

Eine Transporteinrichtung 1 in Form eines Planarmotors weist als Transportbereich eine Transportebene auf, in welcher eine Vielzahl von Antriebsspulen 3 angeordnet sind. Die Antriebsspulen 3 werden im Normalbetrieb beispielsweise in hinlänglich bekannter Weise durch eine Regelungseinheit bzw. einen Antriebsregler 5 angesteuert, um in der Transportebene ein Magnetfeld zu erzeugen und die Transporteinheiten Tn in der Transportebene z.B. entlang einer gewünschten Bewegungsbahn zu bewegen. Durch entsprechende Ansteuerung der Antriebsspulen 3 können ein oder mehrere Transporteinheiten Tn z.B. auch entlang komplexerer Bewegungsbahnen bewegt werden, welche nicht unbedingt nur parallel zu einer der Achsen der Transportebene des Planarmotors liegen. Weiterhin kann bei einer Transporteinrichtung 1 in Form eines Planarmotors die Transportebene, je nach Anwendung und Bedarf, beliebig geformt bzw. beliebig im Raum geführt sein. Weiters bestehen die Transportebene und damit die möglichen Bewegungsbahnen bzw. Transportstrecken 2 der Transporteinheiten Tn oftmals aus mehreren aneinander angeordneten Transportsegmenten TSk.

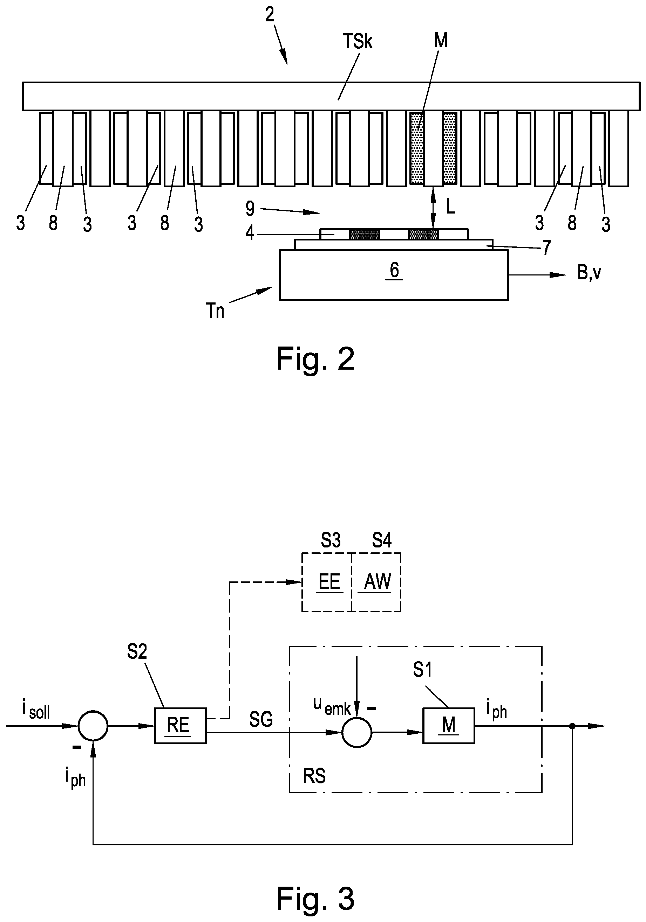

Figur 2 zeigt im Detail einen Aufbau eines beispielhaften Transportsegments TSk der Transportstrecke 2 sowie einer beispielhaften Transporteinheit Tn, welche sich entlang des Transportsegments TSk bewegt. Die Transporteinheit Tn weist beispielsweise einen Grundkörper 6 auf, an welchem eine Träger- oder Magnetplatte 7 angebracht ist. Auf der Magnetplatte 7 sind z.B. die Antriebsmagnete 4 angeordnet. Ein Antriebsmagnet 4 kann als Elektromagnet (Erregungsspulen) und/oder als Permanentmagnet ausgeführt sein. Bei der in Figur 2 beispielhaft dargestellten Transporteinheit Tn sind die Antriebsmagnete 4 z.B. als Permanentmagnete ausgeführt und z.B. mit alternierender Polung auf der Magnetplatte 7 angeordnet.

Bei einer für einen Einsatz an einem linearen Langstatorlinearmotor ausgestalteten Transporteinheit Tn können an der Transporteinheit Tn natürlich auch noch Führungselemente, wie Rollen, Räder, Gleitflächen, Führungsmagnete, etc., vorgesehen sein, um die Transporteinheit Tn entlang der Transportstrecke 2 zu führen und zu halten, insbesondere auch bei Stillstand. Die Führungselemente der Transporteinheit Tn wirken dabei zur Führung mit der Transportstrecke 2 oder den Transportsegmenten TSk zusammen, z.B. indem sich die Führungselemente an der Transportstrecke 2 abstützen, einhaken, daran abgleiten oder abrollen, etc.

Entlang des Transportsegments TSk sind die Antriebsspulen 3 - vorzugsweise auf Zähnen 8 eines ferromagnetischen Kerns (beispielsweise einem Eisen-Blechpakets) angeordnet. Die Antriebsspulen 3 können aber natürlich auch kernlos ausgeführt sein. Von den Antriebsmagneten 4 der Transporteinheit Tn wird ein magnetisches Erregungsfeld erzeugt, welche mit dem elektro-magnetischen Feld der Antriebsspulen 3 des Transportsegments TSk zusammenwirkt. Durch eine entsprechende Bestromung der einzelnen Antriebsspulen 3 im Bereich der Transporteinheit Tn wird die Vortriebskraft Fv erzeugt bzw. deren Größe beeinflusst. Dadurch wird die Transporteinheit Tn entlang dem Transportsegment TSk bzw. entlang der Transportstrecke 2 in eine gewünschte Bewegungsrichtung B mit einer Geschwindigkeit v bewegt. Zwischen den Antriebsspulen 3 des Transportsegments TSk und den Antriebsmagneten 4 der Transporteinheit Tn ist ein Luftspalt 9 mit einer Luftspaltbreite oder -größe L ausgebildet.

Für eine Überwachung eines Betriebs der Transporteinrichtung 1 kann nun in einem Auswahlschritt S1 zumindest eine der Antriebsspulen 3 ausgewählt werden, welche als Messspule M für die Überwachung verwendet wird. Bei Transporteinrichtungen 1 mit zumindest zwei oder mehreren Transportsegmenten TSk kann beispielsweise in jedem Transportsegment TSk zumindest eine Antriebsspule 3 als Messspule M festgelegt werden. Alternativ ist es auch möglich, nur in ausgewählten Transportsegmenten TSk, welche beispielsweise überprüft oder während des Betriebs der Transporteinrichtung 1 überwacht werden sollen, zumindest eine Antriebsspule 3 auszuwählen, welche dann als Messspule M fungiert. Weiterhin besteht die Möglichkeit, in einem Transportsegment TSk auch gleichzeitig mehrere Antriebsspulen 3 als Messspulen M auszuwählen bzw. zu verwenden, wobei die als Messspulen M ausgewählten Antriebsspulen 3 räumlich voneinander getrennt sein sollten.

In der Regel fungiert eine als Messspule M ausgewählte Antriebsspule 3 nur zeitlich begrenzt, beispielsweise für einen Messzyklus bzw. für einen Überfahrt einer Transporteinheit Tn, als Messspule M. Danach wird die Messspule M wieder nur mehr als Antriebsspule 3 genutzt. Es ist allerdings auch möglich, dass zumindest eine Antriebsspule 3 z.B. für zwei oder mehrere Messzyklen bzw. Überfahrten von Transporteinheiten Tn oder dauerhaft als Messspulen M ausgewählt werden.

In Figur 3 ist beispielhaft und schematisch eine Vorrichtung zum Überwachen eines Betriebs der Transporteinrichtung 1 sowie ein beispielhafter Ablauf eines Verfahrens zum Überwachen des Betriebs der Transporteinrichtung 1 gezeigt. Die Vorrichtung weist zumindest eine Regeleinheit RE, eine Messspule M, welche eine Regelstrecke RS bildet, eine Einheit EE zum Erfassen eines zeitlichen Verlaufs einer Stellgröße SG, welche von der Regeleinheit RE ausgegeben wird, und eine Auswerteeinheit AW zum Auswerten des erfassten, zeitlichen Verlaufs der Stellgröße SG auf.

Für die Überwachung der Transporteinrichtung 1 - z.B. während des laufenden Betriebs der Transporteinrichtung 1 oder während einer Testphase der Transporteinrichtung 1 - wird im Auswahlschritt S1 - wie schon in Figur 2 gezeigt - zumindest eine Antriebsspule 3 ausgewählt, welche für die Überwachung der Transporteinrichtung 1 als Messspule M fungiert. In der Regel wird die Antriebsspule 3 nur für die Dauer eines Messzyklus - d.h. für die Dauer z.B. eines Durchlaufs des Verfahrens zum Überwachen der Transporteinrichtung 1 bzw. die Dauer einer Überfahrt einer Transporteinheit Tn - als Messspule M ausgewählt. Für einen weiteren bzw. folgende Messzyklen kann beispielsweise zumindest eine andere Antriebsspule 3 der Transportstrecke 2 bzw. eines jeweiligen Transportsegments TSk als Messspule M verwendet werden. Alternativ kann aber auch zumindest eine Antriebsspule 3 der Transporteinrichtung 1 oder eines Transportsegments TSk für zwei oder mehrere Messzyklen oder dauerhaft als Messspule M festgelegt werden.

Während einer Bewegung bzw. einer Überfahrt der Transporteinheit Tn über die Messspule M wird in einem Regelungsschritt S2 der Messspule M als Regelstrecke RS eine Stellgröße SG, z.B. eine Stellspannung $u_{ph}$, als Anregesignal vorgegeben. Durch die Vorgabe der Stellgröße SG stellt sich ein Regelstrom ein und es wird der jeweils aktuelle Spulenstrom $i_{ph}$ auf einen vorgegeben Sollwert $i_{soll}$ geregelt. Dazu wird der aktuelle Spulenstrom $i_{ph}$ in der Messspule M ermittelt und an einen Eingang der Regeleinheit RE zurückgekoppelt. Der aktuell ermittelte Spulenstrom $i_{ph}$ wird mit dem vorgegebenen Sollwert $i_{soll}$ verglichen und die Differenz zwischen dem jeweils aktuellen Spulenstrom $i_{ph}$ und dem Sollwert $i_{soll}$ der Regeleinheit RE zum Ermitteln der Stellgröße SG bzw. der Stellspannung $u_{ph}$ als Anregesignal zugeführt. Von der Regeleinheit RE wird dann die entsprechende Stellgröße SG bzw. Stellspannung $u_{ph}$ der Messspule M vorgegeben bzw. eingeprägt. Es stellt sich dann ein entsprechender Regelstrom ein, wo-

durch der Spulenstrom $i_{ph}$ auf den vorgegebenen Sollwert $i_{soll}$ geregelt wird. Als Sollwert $i_{soll}$ kann beispielsweise ein Sollwert von Null vorgegeben werden, wobei dann die als Messspule M ausgewählte Antriebsspule 3 nicht mehr an einer Regelung zur Bildung der Vortriebskraft Fv teilnimmt.

Bei der Überfahrt der Transporteinheit Tn über die Messspule M werden die Antriebsmagnete 4 der Transporteinheit Tn über die Messspule M bewegt, wodurch aufgrund der Antriebsmagnete 4 in der Messspule M eine Spannung $u_{emk}$ induziert wird. Wird beispielsweise ein Sollwert $i_{soll}$ von Null für den jeweils aktuellen Spulenstrom $i_{ph}$ vorgegeben, so kann sich während des Regelungsschritts S2 bzw. während der Überfahrt der Transporteinheit Tn über die Messspule M der jeweils aktuelle Spulenstrom $i_{ph}$ nur ausprägen, wenn es zu einer Differenz zwischen der in der Messspule M induzierten Spannung $u_{emk}$ und der der Messspule M als Anregesignal vorgegebenen Stellgröße SG bzw. Stellspannung $u_{ph}$ kommt. Entspricht die Stellgröße SG bzw. die Stellspannung $u_{ph}$ der in der Messspule M während der Überfahrt der Transporteinheit Tn induzierten Spannung $u_{emk}$, so fließt in der Messspule M z.B. ein Spulenstrom $i_{ph}$ mit dem vorgegebenen Sollwert $i_{soll}$ von Null. D.h. es kann kein Spulenstrom $i_{ph}$ in der Messspule M fließen. Im Regelschritt S2 wird der Messspule M daher die Stellgröße SG derart vorgegeben, dass der jeweils aktuelle Spulenstrom $i_{ph}$ in der Messspule M auf den vorgegebenen Sollwert $i_{soll}$ - z.B. auf den Wert Null - geregelt wird. Die als Messspule M gewählte Antriebsspule 3 kann daher bei einem Sollwert $i_{soll}$ von Null während ihrer Funktion als Messspule M auch nicht mehr für die Regelung zur Bildung der Vortriebskraft Fv herangezogen werden.

Wird beispielsweise für die Regelung des jeweils aktuellen Spulenstroms $i_{ph}$ ein beliebiger Sollwert $i_{soll}$ (d.h. ungleich Null) vorgegeben, so muss z.B. ein Spannungsabfall an der Messspule M berücksichtigt werden, welcher durch einen ohmschen Anteil $R_{ph}$ und eine Induktivität $L_{ph}$ der Messspule M sowie durch den Spulenstrom $i_{ph}$ verursacht wird. Die Regelung des Spulenstroms $i_{ph}$ in der Messspule M auf einen beliebigen Sollwert $i_{soll}$ weist allerdings den Vorteil auf, dass die als Messspule M ausgewählte Antriebsspule 3 beispielsweise zusätzlich zur Funktion als Messspule M weiterhin als Antriebsspule 3 verwendet werden kann - d.h. an der Regelung zur Bildung der Vortriebskraft Fv teilnimmt.

Als Regeleinheit RE kann beispielsweise ein bereits vorhandener Antriebsregler 5, welcher der Messspule M zugeordnet ist, verwendet werden. Dazu kann der Antriebsregler 5 der Messspule M z.B. durch eine entsprechende Regelkomponente erweitert werden. Alternativ kann die Regeleinheit RE auch als zusätzlicher Regler RE mit einer entsprechenden Übertragungsfunktion vorgesehen werden.

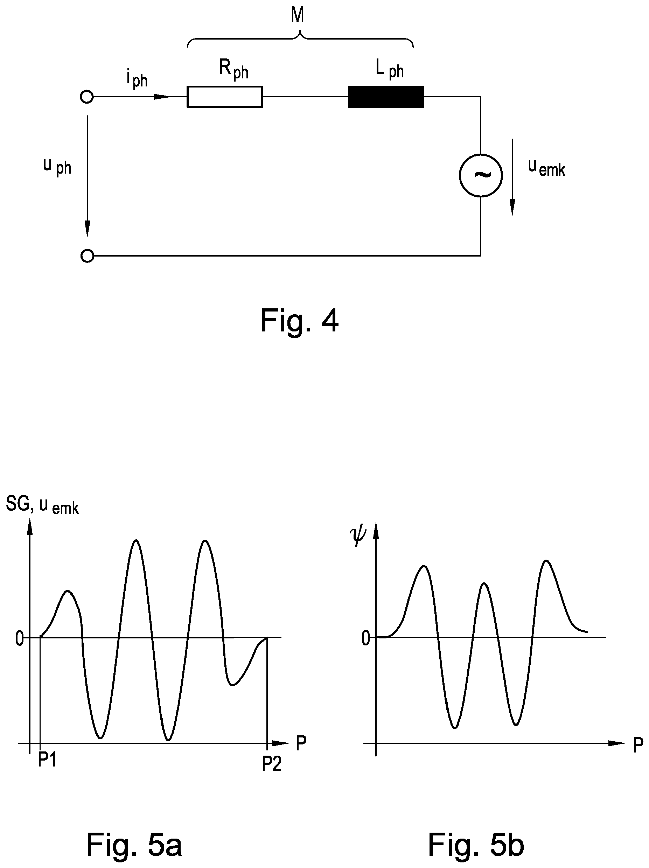

Für einen Entwurf der Regeleinheit RE, durch welchen in der Messspule M während der Überfahrt der Transporteinheit Tn der Spulenstrom $i_{ph}$ auf den vorgegebenen Sollwert $i_{soll}$ (z.B. den Wert Null) geregelt wird, kann beispielsweise ein vereinfachtes Ersatzschaltbild der Messspule M herangezogen werden. Aus diesen vereinfachten Ersatzschaltbild, welche in Figur 4 dargestellt ist, kann beispielsweise die Übertragungsfunktion der Regeleinheit RE abgeleitet werden.

Das Ersatzschaltbild der Messspule M weist z.B. einen ohmschen Anteil $R_{ph}$ sowie eine Induktivität $L_{ph}$ auf. Durch die Bewegung der Transporteinheit Tn wird in der Messspule M die Spannung $u_{emk}$ induziert, welche als Spannungsquelle $u_{emk}$ dargestellt ist. Zwischen Anschlussklemmen des Ersatzschaltbildes fällt weiterhin die Stellspannung $u_{ph}$ ab, welche der von der Regeleinheit RE ausgegebenen Stellgröße SG entspricht. Besteht eine Spannungsdifferenz zwischen der induzierten Spannung $u_{emk}$ und der Stellspannung $u_{ph}$, so fließt in der Messspule M der Spulenstrom $i_{ph}$, durch welchen auch ein Spannungsabfall an der Messspule M - am ohmschen Anteil $R_{ph}$ und an der Induktivität $L_{ph}$ - verursacht wird. Der Zusammenhang lässt sich beispielsweise, wie folgt, beschreiben:

$$u_{emk} = u_{ph} - R_{ph}*i_{ph} - L_{ph}*(di_{ph}/dt).$$

Aus diesem Zusammenhang ist ersichtlich, dass für eine Regelung des Spulenstroms $i_{ph}$ auf den vorgegebenen Sollwert $i_{soll}$ (z.B. den Wert von Null) die Stellgröße SG bzw. die Stellspannung $u_{ph}$ der in der Messspule M induzierten Spannung $u_{emk}$ - gegebenenfalls unter Berücksichtigung des Spannungsabfalls an der Messspule M - entspricht. D.h. sind z.B. die induzierten Spannung $u_{emk}$ und der Stellspannung $u_{ph}$ gleich groß, so wird kein Strom $i_{ph}$ durch die Messspule M fließen. Damit kann aus dem in Figur 4 beispielhaft dargestellten Ersatzschaltbild die Übertragungsfunktion für die Regeleinheit RE ableiten.

Für die Regelstrecke RS bzw. die Messspule M ergibt sich damit im so genannten Laplace-Bereich z.B. folgende Übertragungsfunktion F(s), auf deren Basis beispielsweise dann die Regeleinheit entworfen werden kann:

$$F(s) = \frac{iph}{uph} = \frac{1}{Rph + s*Lph}$$

Dabei stellt F(s) eine Laplace-Transformierte einer Funktion f(t) dar. Durch die so genannte Laplace-Transformation wird eine gegebene Funktion f(t) im reellen Zeitbereich in eine Funktion F(s) in einem komplexen Spektralbereich (z.B. Frequenzbereich) übergeführt.

Die in der Messspule M während der Überfahrt der Transporteinheit Tn induzierte Spannung $u_{emk}$ kann dabei beispielsweise - wie in Figur 3 dargestellt - als Störgröße interpretiert werden, welche an einem Eingang der Messspule M bzw. der Regelstrecke RS wirkt. Bei der Regelung muss diese Störgröße $u_{emk}$ von der Regeleinheit RE (zusätzlich) gestellt werden.

Alternativ kann die induzierte Spannung $u_{emk}$ bzw. die Störgröße $u_{emk}$ beispielsweise mittels einer Vorsteuerung kompensiert werden. Dazu wird die Stellgröße SG mit Erwartungswerten der induzierten Spannung $u_{emk}$ beaufschlagt, welche z.B. auf Basis einer Geschwindigkeit der Transporteinheiten Tn mit Hilfe von dynamischen, mathematischen Modellen abgeschätzt werden. Durch die optionale Vorsteuerung, welche z.B. in die Regeleinheit RE integriert sein kann, wird die Regeleinheit RE idealerweise entlastet.

In einem Erfassungsschritt S3 wird dann ein zeitlicher Verlauf der von der Regeleinheit RE ausgegebenen Stellgröße SG erfasst, solange die Transporteinheit Tn über die Messspule M bewegt wird. Die Stellgröße SG entspricht dabei der Stellspannung $u_{ph}$, welche der Messspule M als Anregesignal vorgegeben wird. Der Spulenstrom $i_{ph}$ wird durch die Regeleinheit RE während der Bewegung der Transporteinheit Tn über die Messspule M laufend auf den vorgegebenen Sollwert $i_{soll}$ (z.B. den Wert von Null) geregelt und der zeitliche Verlauf der von der Regeleinheit RE ausgegebenen Stellgröße SG bzw. der Stellspannung $u_{ph}$ erfasst. Das Erfassen des zeitlichen Verlaufs der Stellgröße SG kann z.B. mittels der Einheit EE zum Erfassen des zeitlichen Verlaufs der Stellgröße SG erfolgen. Diese Einheit EE kann beispielsweise als eigenständige Einheit ausgeführt sein oder in die Regeleinheit RE integriert sein.

Aus dem erfassten, zeitlichen Verlauf der von der Regeleinheit RE ausgegebenen Stellgröße SG bzw. der Stellspannung $u_{ph}$ kann der zeitliche Verlauf der in der Messspule M durch die Antriebsmagnete 4 der Transporteinheit Tn induzierten Spannung $u_{emk}$ ermittelt werden. Bei einem vorgegebenen Sollwert $i_{soll}$ von Null entspricht beispielsweise der zeitliche Verlauf von der Regeleinheit RE ausgegebenen Stellgröße SG bzw. der Stellspannung $u_{ph}$ dem zeitlichen Verlauf der in der Messspule M durch die Antriebsmagnete 4 der Transporteinheit Tn induzierten Spannung $u_{emk}$.

Bei einem vorgegebenen Sollwert $i_{soll}$ mit einem beliebig gewählten Wert bzw. mit einem Wert ungleich Null ist beispielsweise der durch den Spulenstrom $i_{ph}$ verursachte Spannungsabfall an der Messspule M zu berücksichtigen, um den zeitlichen Verlauf der induzierten Spannung $u_{emk}$ aus dem erfassten, zeitlichen Verlauf der Stellgröße SG bzw. der Stellspannung $u_{ph}$ zu ermitteln. Dazu können beispielsweise vorab einmalig Antriebsspulen 3 der Transportstrecke 2 vermessen werden, wobei beispielsweise der Spannungsabfall über die zumindest eine als Messspule M gewählte Antriebsspule 3 für den vorgegebenen Sollwert $i_{soll}$ mittels Messung bestimmt wird oder der Spannungsabfall für den vorgegebenen Sollwert $i_{soll}$ - z.B. mit Hilfe eines Modells für die Spule 3 mit z.B. zumindest einem ohmschen Anteil $R_{ph}$ und einer Induktivität $L_{ph}$ - modelliert wird.

In einem Auswerteschritt S4 wird der erfasste, zeitliche Verlauf der Stellgröße SG für eine Überwachung der Transporteinrichtung Tn ausgewertet, wobei der Erfassungsschritt S3 und der Auswerteschritt S4 beispielsweise großteils parallel ablaufen können. D.h. im Auswerteschritt S4 können z.B. bereits erste erfasste Werte der von der Regeleinheit RE ausgegebenen Stellgröße SG ausgewertet werden, während weiterhin die Transporteinheit Tn über die Messspule M bewegt wird und im Erfassungsschritt S3 weitere Werte für den zeitlichen Verlauf der Stellgröße SG erfasst werden.

Im Auswerteschritt S4 kann beispielsweise mittels einer Auswerteeinheit AW zum Auswerten des zeitlichen Verlaufs der Stellgröße SG aus dem erfassten, zeitlichen Verlauf der Stellgröße SG bzw. aus dem daraus ermittelten, zeitlichen Verlauf der induzierten Spannung $u_{emk}$ auf Eigenschaften der Antriebsmagnete 4 bzw. des Luftspalts 9, wie z.B. der Luftspaltbreite L, geschlossen werden. Weiterhin besteht die Möglichkeit aus Charakteristika (z.B. Minima, Maxima, quadratischer Mittelwert, etc.) des Verlaufs der induzierten Spannung $u_{emk}$ auf eine Normalkraft zu schließen, welche von den Antriebsmagneten 4 der Transporteinheit Tn auf eine Oberfläche der Transportstrecke TSk ausgeübt wird. Auswertungsmöglichkeiten werden in der Folge noch anhand der Figur 5a näher erläutert.

Aus dem erfassten Verlauf der Stellgröße SG kann auch ein Verlauf des magnetischen Flusses $\psi$ abgeleitet werden, welcher für die in der Messspule M induzierte Spannung $u_{emk}$ verantwortlich ist. Eine Ableitung des zeitlichen Verlaufs des magnetischen Flusses $\psi$ sowie dessen Auswertung kann ebenfalls im Auswerteschritt S4 in der Auswerteeinheit AW zum Auswerten des zeitlichen Verlaufs der Stellgröße SG erfolgen. Dazu kann z.B. der Verlauf der induzierten Spannung $u_{emk}$, welcher aus dem erfassten Stellgrößenverlauf ermittelt wurden, aufintegriert werden. Auswertungsmöglichkeiten des zeitlichen Verlaufs des magnetischen Flusses $\psi$ werden in der Folge noch anhand der Figur 5b näher ausgeführt.

Weiterhin kann der zeitliche Verlauf der Stellgröße SG im Auswerteschritt S4 z.B. wieder von der Auswerteeinheit AW zum Auswerten des zeitlichen Verlaufs der Stellgröße SG auf eine Nenngeschwindigkeit (z.B. 1 m/s) der Transporteinheit Tn normiert werden.

Figur 5a zeigt beispielshaft einen erfassten, zeitlichen Verlauf der Stellgröße SG, wobei der Spulenstrom $i_{ph}$ auf einen vorgegebenen Sollwert $i_{soll}$ von Null geregelt wurde. Damit entspricht der zeitliche Verlauf der Stellgröße SG auch dem zeitlichen Verlauf der in der Messspule M induzierten Spannung $u_{emk}$, während die Transporteinheit Tn über die Messspule M bewegt wird. Auf einer x-Achse ist dabei eine jeweilige Position der Transporteinheit Tn in Metern über der ausgewählten Messspule M aufgetragen. Die y-Achse zeigt einen zugehörigen Wert der Stellgröße SG bzw. der Stellspannung $u_{ph}$ und damit der in der Messspule M induzierten Spannung $u_{emk}$ während der Regelung des Spulenstroms $i_{ph}$ auf den vorgegebenen Sollwert $i_{soll}$ bzw. auf den Wert Null. Die Stellgröße SG bzw. die Stellspannung $u_{ph}$ bzw. die in der Messspule M induzierten Spannung $u_{emk}$ sind dabei in Volt aufgetragen. Aus dem in Figur 5a dargestellten Verlauf ist ersichtlich, dass es bei einer ersten Position P1 der Transporteinheit Tn zu einer erstmaligen Überdeckung eines ersten Antriebsmagneten 4 der Transporteinheit Tn mit der Messspule M kommt. An der ersten Position P1 beginnt die induzierte Spannung $u_{emk}$ und damit die Stellgröße SG zu steigen, da ab der ersten Position P1 die Regeleinheit RE beginnt, den Spulenstrom $i_{ph}$ auf den Sollwert $i_{soll}$ bzw. auf der Wert Null zu regeln. Der weitere Verlauf der induzierte Spannung $u_{emk}$ bzw. der Stellgröße SG zeigt, wie diese ansteigen bzw. absinken und positive oder negative Extremwerte annehmen, je nachdem wie viele und welche Antriebsmagnete 4 der Transporteinheit Tn mit einer jeweiligen Polung an der jeweiligen Position, welche die Transporteinheit Tn durch die Bewegung einnimmt, mit der Messspule M in Wirkung treten. Bei einer zweiten Position P2 der Transporteinheit Tn wird der Bereich der Messspule M vom letzten Antriebsmagneten 4 der Transporteinheit Tn verlassen. Die induzierte Spannung $u_{emk}$ bzw. die Stellgröße SG sinkt dann wieder auf einen Spannungswert von Null.

Aus dem in Figur 5a beispielhaft dargestellten Verlauf der Stellgröße SG bzw. der in der Messspule M induzierten Spannung $u_{emk}$ können Eigenschaften für die Transporteinrichtung 1, insbesondere Eigenschaften der Antriebsmagnete 4 der jeweiligen Transporteinheit Tn, z.B. während des laufenden Betriebs, während eines vorgegebenen Beobachtungszeitraums oder während einer Testphase, etc. abgeleitet werden. Vor allem aus den Charakteristika der erfassten, induzierten Spannung $u_{emk}$, wie z.B. Minima, Maxima, quadratischer Mittelwert, etc., kann beispielsweise auf die Normalkraft geschlossen werden, mit welcher die Antriebsmagnete 4 auf die Oberfläche der Transportstrecke 2 bzw. des jeweiligen Transportsegments TSk wirken.

Dazu kann z.B. der Verlauf der Stellgröße SG bzw. der induzierten Spannung $u_{emk}$ mit einer Testtransporteinheit Tn wiederholt aufgenommen werden, wobei beispielsweise an der Transporteinheit Tn der Luftspalt 9 bzw. die Größe L des Luftspalts 9 zwischen den Antriebsmagneten 4 und der Oberfläche der Transportstrecke 2 für jede Aufnahme der Stellgröße SG verstellt wird. D.h. es werden mehrere Verläufe der Stellgröße SG bzw. der induzierten Spannung $u_{emk}$ mit unterschiedlichen Luftspaltbreiten L bestimmt. Zu diesen Verläufen können dann z.B. Kennwerte wie Minima, Maxima, quadratische Mittelwerte im Auswertungsschritt S4 bestimmt werden. Wird die Testtransporteinheit Tn weiterhin z.B. einmalig vorab mit einem externen Messsystem hinsichtlich der Normalkraft vermessen, so kann z.B. eine Kennlinie für die Normalkraft in Abhängigkeit von den Kennwerten der induzierten Spannung $u_{emk}$ ermittelt werden. Bei bekannten Magneteigenschaft der Antriebsmagneten 4 der jeweiligen Transporteinheit Tn kann weiters auf Basis dieser Kennlinie auf den Luftspalt 9 der jeweiligen Transporteinheit Tn (z.B. Breite des Luftspalts 9, etc.) geschlossen werden.

Weiters kann bei einer Annahme, dass der Luftspalt 9 zwischen der Transporteinheit Tn und der Oberfläche der Transportstrecke 2 in einem vorgegebenen Beobachtungszeitraum konstant bleibt, mit Hilfe des erfindungsgemäßen Verfahrens auf Temperaturänderungen im Bereich der induzierenden Antriebsmagneten 4 an der Transporteinheit Tn geschlossen werden. Dafür wird beispielsweise ein zeitlich kurzer Beobachtungszeitraum (z.B. ein oder einige Tage, etc.) gewählt, während dem ein Verlauf der Stellgröße SG bzw. der induzierten Spannung $u_{emk}$ wiederholt erfasst wird.

Für eine Verschleißbetrachtung (z.B. Verschleiß von Führungselementen an Transporteinheiten Tn, etc.) kann beispielsweise ein längerer Beobachtungszeitraum, wie z.B. eine Dauer von ein oder mehreren Monaten, etc., vorgegeben werden, während welchem wiederholt der Verlauf der Stellgröße SG bzw. der induzierten Spannung $u_{emk}$ ermittelt wird. Daraus werden dann z.B. die Normalkraft und/oder der Luftspalt 9 abgeleitet und aufgezeichnet. Die Wiederholung der Aufzeichnung des Verlaufs der Stellgröße SG im jeweiligen Beobachtungszeitung kann z.B. laufend oder zyklisch in vorgegebenen Abständen (z.B. täglich, wöchentlich, etc.) erfolgen.

So kann bei einer Transporteinrichtung 1 während des Betriebs beispielsweise für ausgewählte Transporteinheiten Tn während eines vorgegebenen Beobachtungszeitraum (z.B. mehrere Tage oder mehrere Monate) wiederholt das erfindungsgemäße Verfahren zum Überwachen des Betriebs einer Transporteinrichtung 1 durchgeführt werden. D.h. es wird für die ausgewählten Transporteinheiten Tn jeweils der Verlauf der Stellgröße SG bzw. der induzierten Spannung $u_{emk}$ an zumindest einer ausgewählten Messspule M erfasst und daraus z.B. ein Verlauf der jeweiligen Normalkraft ermittelt, mit welcher die Antriebsmagnete 4 der jeweiligen Transporteinheit Tn auf die Oberfläche der Transportstrecke wirken. Durch die Veränderungen in den ermittelten Verläufen kann z.B. auf einen Verschleiß der Führungselemente der jeweiligen Transporteinheit Tn geschlossen werden. Weiterhin kann aus der Veränderung der Normalkraft z.B. auch auf eine Temperatur der Antriebsmagnete 4 geschlossen werden.

Aus einem zeitlichen Verlauf der Stellgröße SG - wie beispielhaft in Figur 5a gezeigt, kann z.B. mittels Integration ein zeitlicher Verlauf des magnetischen Flusses $\psi$ in Abhängigkeit von einer Position P der Transporteinheit Tn bei der Überfahrt über die Messspule M abgeleitet werden. Ein derartiger Verlauf ist beispielhaft in Figur 5b dargestellt. Auf der x-Achse ist wieder die Position P der Transporteinheit Tn in Metern über der ausgewählten Messspule M dargestellt. Auf der y-Achse ist ein jeweils zugehöriger Wert des magnetischen Flusses $\psi$ aufgetragen. Je nach der Position P der Transporteinheit Tn und dem Zusammenwirken von einem oder mehreren Antriebsmagneten 4 mit der Messspule M und in Abhängigkeit der jeweiligen Polung der wirkenden Antriebsmagnete 4 ergeben sich im zeitlichen Verlauf des magnetischen Flusses $\psi$ Extremwerte (Minima, Ma-

xima) und Nulldurchgänge. Werden diese Extremwerte (Höhe, Lage, Amplitude, etc.) ausgewertet, so können z.B. Rückschlüsse auf ein verwendetes Material der Antriebsmagnete 4, deren Aufbringung (z.B. Klebung, etc.), etc. gemacht werden. So können Extremwerte, wie z.B. die Amplitude der negativen Maxima, welche z.B. einer der Polung der Antriebsmagnete 4 entsprechen, Amplituden der Randmaxima, welche z.B. der Wirkung jeweiligen Randantriebsmagneten entsprechen, etc., mit Erwartungswerten verglichen werden. Weiterhin können auch Abstände der Extremwerte im Verlauf des magnetischen Flusses $\psi$ ausgewertet und mit entsprechenden Erwartungswerten verglichen werden. Auf diese Weise können z.B. Fehler bei der Anbringung der Antriebsmagnete 4 an der Transporteinheit Tn - wie z.B. Magnetablösungen, Verschiebung von Magneten 4, Verdrehungen bei der Polungsrichtung, etc. erkannt werden. Weiterhin kann auf Basis der Auswertung der Extremwerte des zeitlichen Verlaufs des magnetischen Flusses $\psi$ z.B. auch eine Auswahl für Transporteinheiten Tn für den laufenden Betrieb der Transporteinrichtung 1 getroffen werden.

Weiterhin bietet das Verfahren zum Überwachen einer Transporteinrichtung 1 mit der zugehörigen Vorrichtung auch die Möglichkeit, Einstellungen von Transportsegmente TSk der Transportstrecke 2, insbesondere die Einstellung der Transportsegmente TSk im Führungssystem, zu überprüfen. Dazu kann beispielsweise in jedem zu prüfenden Transportsegment TSk zuerst zumindest eine Antriebsspule 3 als Messspule M ausgewählt werden. Auf der Transporteinrichtung 1 bzw. auf der Transportstrecke 2 wird dann eine definierte Transporteinheit Tn positioniert, von welcher z.B. der zeitliche Verlauf der Stellgröße SG oder der Normalkraft bekannt ist. Die Transporteinheit Tn wird dann über die Transportstrecke 2 bzw. über die zu prüfenden Transportsegmente TSk bewegt und dabei der zeitliche Verlauf der Stellgröße SG erfasst sowie entsprechend z.B. die Normalkraft abgeleitet. Dieser Vorgang wird für jede weitere Antriebsspule 3 des jeweils zu prüfenden Transportsegments TSk wiederholt - d.h. jede Antriebsspule 3 des jeweils zu prüfenden Transportsegments TSk fungiert zumindest für einen Messzyklus der Stellgröße SG als Messspule M. Durch eine nachfolgende Auswertung der aufgezeichneten, zeitlichen Verläufe der Stellgröße SG für die Antriebsspulen 3 des jeweils zu prüfenden Transportsegments TSk wird ein Überblick über z.B. Normalkraft und/oder Luftspalt 9 des jeweiligen überprüften Transportsegments TSk der Transportstrecke 2 erhalten. Dadurch können z.B. schlecht oder fehlerhaft eingebaute Transportsegmente TSk, Antriebsspulen 3, etc. erkannt und korrigiert werden.

### *Bezugszeichenliste*

*Figur 1*

1 Transporteinrichtung
2 Transportstrecke
TS1, ..., TSk Transportsegment
U Übergabepositionen
T1, ..., Tn Transporteinheit
3 Antriebsspulen
4 Antriebsmagnete
Fv Vortriebskraft
5 Antriebsregler

*Figur 2*

6 Grundkörper der Transporteinheit
7 Trägerplatte
8 Zähne
9 Luftspalt
B Bewegungsrichtung der Transporteinheit
v Geschwindigkeit der Transporteinheit
L Luftspaltbreite
M Messspule

*Figur 3*

$i_{ph}$ Spulenstrom
ME Messeinheit
$i_{soll}$ Sollwert
RE Regeleinheit
RS Regelstrecke
SG Stellgröße
$u_{emk}$ durch eine Transporteinheit Tn induzierte Spannung EE Einheit zum Erfassen der Stellgröße
AW Auswerteinheit zum Auswerten der erfassten Stellgröße
S1 Auswahlschritt
S2 Regelungsschritt
S3 Erfassungsschritt
S4 Auswerteschritt

*Figur 4*

$R_{ph}$ ohmscher Anteil der Messspule
$L_{ph}$ Induktivität der Messspule
$u_{ph}$ Spannung an Messspule

*Figur 5a und 5b*

P Position der Transporteinheit
P1 erste Position der Transporteinheit
P2 zweite Position der Transporteinheit
$\psi$ magnetischer Fluss

### Patentansprüche

1. Verfahren zum Überwachen eines Betriebs einer Transporteinrichtung (1) in Form eines Langstatorlinearmotors mit einer Transportstrecke (2), entlang welcher eine Vielzahl an Antriebsspulen (3) angeordnet ist, und wobei zumindest eine Transporteinheit (Tn) entlang der Transportstrecke (2) bewegt wird, wobei Antriebsmagnete (4) der Transporteinheit (Tn) für eine Erzeugung einer Vortriebskraft (Fv) mit den Antriebsspulen (3) der Transportstrecke (2) zusammenwirken, *dadurch gekennzeichnet, dass* zumindest eine Antriebsspule (3) der Transportstrecke (2) als Messspule (M) ausgewählt wird (S1), *dass* während einer Bewegung der zumindest einen Transporteinheit (Tn) über die Messspule (M) eine Stellgröße (SG) als Anregesignal derart vorgegeben wird (S2), dass ein jeweils aktueller Spulenstrom ($i_{ph}$) in der Messspule (M) auf einen vorgegebenen Sollwert ($i_{soll}$) geregelt wird, *dass* während die zumindest eine Transporteinheit (Tn) über die Messspule (M) bewegt wird, ein zeitlicher Verlauf der Stellgröße (SG) erfasst wird (S3), und *dass* der erfasste, zeitliche Verlauf der Stellgröße (SG) für eine Überwachung der Transporteinrichtung (1) ausgewertet wird (S4).

2. Verfahren nach Anspruch 1, *dadurch gekennzeichnet, dass* als Sollwert ($i_{soll}$) ein Wert von Null vorgegeben wird (S2).

3. Verfahren nach Anspruch 1 oder 2, *dadurch gekennzeichnet, dass* ein Antriebsregler, welcher der als Messspule (M) ausgewählten Antriebsspule (3) zugeordnet ist, für eine Vorgabe der Stellgröße (SG) als Anregesignal eingesetzt wird (S2).

4. Verfahren nach einem der vorangegangenen Ansprüche, *dadurch gekennzeichnet, dass* bei einer Transportstrecke (2) mit zumindest zwei Transportsegmenten (TSk) in jedem Transportsegment (TSk) zumindest eine Antriebsspule (3) als Messspule (M) ausgewählt wird (S1).

5. Verfahren nach einem der vorangegangenen Ansprüche, *dadurch gekennzeichnet, dass* die zumindest eine Antriebsspule (3) der Transportstrecke (2) zeitlich begrenzt, insbesondere für eine Dauer eines Messzyklus, als Messspule (M) ausgewählt wird (S1).

6. Verfahren nach einem der Ansprüche 1 bis 4, *dadurch gekennzeichnet, dass* die zumindest eine Antriebsspule (3) der Transportstrecke (2) dauerhaft als Messspule (M) ausgewählt wird (S1).

7. Verfahren nach einem der vorangegangenen Ansprüche, *dadurch gekennzeichnet, dass* ein Beobachtungszeitraum vorgegeben wird, in welchem der zeitliche Verlauf der Stellgröße (SG) erfasst wird (S3).

8. Verfahren nach einem der vorangegangenen Ansprüche, *dadurch gekennzeichnet, dass* der zeitliche Verlauf der Stellgröße (SG) in sich zyklisch wiederholenden Abständen erfasst wird (S3).

9. Verfahren nach einem der vorangegangenen Ansprüche, *dadurch gekennzeichnet, dass* für eine Auswertung ein zeitlicher Verlauf eines magnetischen Flusses ($\psi$) aus dem erfassten, zeitlichen Verlauf der Stellgröße (SG) abgeleitet wird (S4).

10. Verfahren nach einem der vorangegangenen Ansprüche, *dadurch gekennzeichnet, dass* der erfasste, zeitliche Verlauf der Stellgröße (SG) auf eine Nenngeschwindigkeit der zumindest einen Transporteinheit normiert wird (S4).

11. Vorrichtung zum Überwachen des Betriebs einer Transporteinrichtung (1) in Form eines Langstatorlinearmotors mit einer Transportstrecke (2), entlang welcher eine Vielzahl an Antriebsspulen (3) angeordnet ist, und mit zumindest einer Transporteinheit (Tn), welche entlang der Transportstrecke (2) bewegbar ist, wobei Antriebsmagnete (4) der Transporteinheit (Tn) zur Erzeugung einer Vortriebskraft (Fv) mit den Antriebsspulen (3) der Transportstrecke (2) zusammenwirken, *dadurch gekennzeichnet, dass* die Vorrichtung zumindest aufweist:

- eine Messspule (M), welche aus der Vielzahl der entlang der Transportstrecke (2) angeordneten Antriebsspulen (3) auswählbar ist;
- eine Regeleinheit (RE), welche dazu eingerichtet ist, der Messspule (M) eine Stellgröße (SG) als Anregesignal derart vorzugeben, dass der jeweils aktuelle Spulenstrom ($i_{ph}$) auf einen vorgegebenen Sollwert ($i_{soll}$) geregelt wird;
- eine Einheit (EE) zum Erfassen eines zeitlichen Verlaufs der Stellgröße (SG); und
- eine Auswerteeinheit (AW) zum Auswerten des zeitlichen Verlaufs der Stellgröße (SG).

12. Vorrichtung nach Anspruch 11, *dadurch gekennzeichnet, dass* ein Antriebsregler (5), welcher der als Messspule (M) ausgewählten Antriebsspule (3) zugeordnet ist, als Regeleinheit (RE) einsetzbar ist.

13. Vorrichtung nach einem der Ansprüche 11 bis 12, *dadurch gekennzeichnet, dass* die Einheit (EE) zum Erfassen des zeitlichen Verlaufs der Stellgröße (SG) in die Regeleinheit (RE) integriert ist.

14. Vorrichtung nach einem der Ansprüche 11 bis 13, *dadurch gekennzeichnet, dass* die Auswerteeinheit (AW) zum Auswerten des zeitlichen Verlaufs der Stellgröße (SG) dazu eingerichtet ist, einen zeitlichen Verlauf eines magnetischen Flusses ($\psi$) aus dem erfassten Verlauf der Stellgröße (SG) abzuleiten.

Claims

1. A method for monitoring the operation of a transport device (1) in the form of a long stator linear motor having a transport track (2) along which a plurality of drive coils (3) are arranged, and wherein at least one transport unit (Tn) is moved along the transport track (2), wherein drive magnets (4) of the transport unit (Tn) interact with the drive coils (3) of the transport track (2) to produce a propulsive force (Fv), *characterized in that* at least one drive coil (3) of the transport track (2) is selected (S1) as a measurement coil (M), *in that,* while the at least one transport unit (Tn) is moving over the measurement coil (M), a manipulated variable (SG) is predetermined (S2) as an excitation signal in a such way that a respective present coil current ($i_{ph}$) in the measurement coil (M) is controlled to a predetermined setpoint value ($i_{soll}$), *in that* a time profile of the manipulated variable (SG) is captured (S3), while the at least one transport unit (Tn) is being moved over the measurement coil (M), *and in that* the captured time profile of the manipulated variable (SG) is evaluated (S4) to monitor the transport device (1).

2. The method as claimed in claim *1, characterized in that* a value of zero is specified (S2) as the setpoint value ($i_{soll}$).

3. The method as claimed in claim 1 or 2, *characterized in that* a drive controller, which is assigned to the drive coil (3) selected as the measurement coil (M), is used for predetermining the manipulated variable (SG) as the excitation signal (S2).

4. The method as claimed in one of the preceding claims, *characterized in that,* in the case of a transport track (2) with at least two transport segments (TSk), at least one drive coil (3) is selected (S1) as the measurement coil (M) in each transport segment (TSk).

5. The method as claimed in one of the preceding claims, *characterized in that* the at least one drive coil (3) of the transport track (2) is selected (S1) as the measurement coil (M) for a limited time, in particular for a duration of one measurement cycle.

6. The method as claimed in one of claims 1 to 4, *characterized in that* the at least one drive coil (3) of the transport track (2) is selected (S1) as the measurement coil (M) permanently.

7. The method as claimed in one of the preceding claims, *characterized in that* an observation period, in which the time profile of the manipulated variable (SG) is captured (S3), is specified.

8. The method as claimed in one of the preceding claims, *characterized in that* the time profile of the manipulated variable (SG) is captured (S3) at cyclically repeating intervals.

9. The method as claimed in one of the preceding claims, *characterized in that* a time profile of a magnetic flux ($\psi$) is derived (S4) from the captured time profile of the manipulated variable (SG) for evaluation.

10. The method as claimed in one of the preceding claims, *characterized in that* the captured time profile of the manipulated variable (SG) is normalized (S4) to a nominal speed of the at least one transport unit.

11. An apparatus for monitoring the operation of a transport device (1) in the form of a long stator linear motor having a transport track (2) along which a plurality of drive coils (3) are arranged, and having at least one transport unit (Tn) which is able to be moved along the transport track (2), wherein drive magnets (4) of the transport unit (Tn) interact with the drive coils (3) of the transport track (2) to produce a propulsive force (Fv), *characterized in that* the apparatus at least comprises:

   - a measurement coil (M) being selected from the plurality of drive coils (3) arranged along the transport track (2);
   - a control unit (RE) which is configured to predetermine a manipulated variable (SG) as an excitation signal to the measurement coil (M) in such a way that the respective present coil current ($i_{ph}$) is controlled to a specified setpoint value ($i_{soll}$);
   - a unit (EE) for capturing a time profile of the manipulated variable (SG); and
   - an evaluation unit (AW) for evaluating the time profile of the manipulated variable (SG).

12. The apparatus as claimed in claim 11, *characterized in that* a drive controller (5), which is assigned to the drive coil (3) selected as the measurement coil (M), is used as the control unit (RE).

13. The apparatus as claimed in one of claims 11 to 12, *characterized in that* the unit (EE) for capturing the time profile of the manipulated variable (SG) is integrated into the control unit (RE).

14. The apparatus as claimed in one of claims 11 to 13, *characterized in that* the evaluation unit (AW) for evaluating the time profile of the manipulated variable (SG) is configured to derive a time profile of a magnetic flux ($\psi$) from the captured profile of the manipulated variable (SG).

**Revendications**

1. Procédé permettant de surveiller le fonctionnement d'un dispositif de transport (1) se présentant sous la forme d'un moteur linéaire à stator longitudinal, présentant une section de transport (2) le long de laquelle sont disposées une pluralité de bobines d'entraînement (3), et au moins une unité de transport (Tn) étant déplacée le long de la section de transport (2), des aimants d'entraînement (4) de l'unité de transport (Tn) coopérant avec les bobines d'entraînement (3) de la section de transport (2) pour générer une force de propulsion (FV), **caractérisé en ce qu'**au moins une bobine d'entraînement (3) de la section de transport (2) est sélectionnée (S1) en tant que bobine de mesure (M), **en ce que**, pendant un déplacement de ladite au moins une unité de transport (Tn) sur la bobine de mesure (M), une variable manipulée (SG) est prédéfinie (S2) en tant que signal d'excitation de telle sorte qu'un courant de bobine actuel respectif ($i_{ph}$) dans la bobine de mesure (M) soit régulé à une valeur de consigne prédéfinie ($i_{soll}$), **en ce que**, pendant que ladite au moins une unité de transport (Tn) est déplacée sur la bobine de mesure (M), un profil temporel de la variable manipulée (SG) est détecté (S3) et le profil temporel détecté de la variable manipulée (SG) est évalué (S4) pour la surveillance du dispositif de transport (1).

2. Procédé selon la revendication 1, **caractérisé en ce qu'**une valeur égale à zéro est prédéfinie (S2) en tant que valeur de consigne ($i_{soll}$).

3. Procédé selon la revendication 1 ou 2, **caractérisé en ce qu'**un régulateur d'entraînement associé à la bobine d'entraînement (3) sélectionnée en tant que bobine de mesure (M) est utilisé (S2) en tant que signal d'excitation pour prédéfinir la variable manipulée (SG).

4. Procédé selon l'une quelconque des revendications précédentes, **caractérisé en ce que**, dans le cas d'une section de transport (2) comportant au moins deux segments de transport (TSk), au moins une bobine d'entraînement (3) est sélectionnée (S1) en tant que bobine de mesure (M) dans chaque segment de transport (TSK).

5. Procédé selon l'une quelconque des revendications précédentes, **caractérisé en ce que** ladite au moins une bobine d'entraînement (3) de la section de transport (2) est sélectionnée (S1) en tant que bobine de mesure (M) de manière limitée dans le temps, en particulier pour une durée d'un cycle de mesure.

6. Procédé selon l'une quelconque des revendications 1 à 4, **caractérisé en ce que** ladite au moins une bobine d'entraînement (3) de la section de transport (2) est sélectionnée (S1) de manière permanente en tant que bobine de mesure (M).

7. Procédé selon l'une quelconque des revendications précédentes, **caractérisé en ce qu'**on prédéfinit une période d'observation au cours de laquelle le profil temporel de la variable manipulée (SG) est détecté (S3).

8. Procédé selon l'une quelconque des revendications précédentes, **caractérisé en ce que** le profil temporel de la variable manipulée (SG) est détecté à des intervalles (S3) se répétant de manière cyclique.

9. Procédé selon l'une quelconque des revendications précédentes, **caractérisé en ce que**, pour une évaluation, on déduit (S4) un profil temporel d'un flux magnétique ($\Psi$) à partir du profil temporel détecté de la variable manipulée (SG).

10. Procédé selon l'une quelconque des revendications précédentes, **caractérisé en ce que** le profil temporel détecté de la variable manipulée (SG) est normalisé (S4) par rapport à une vitesse nominale de ladite au moins une unité de transport.

11. Dispositif permettant de surveiller le fonctionnement d'un dispositif de transport (1) sous la forme d'un moteur linéaire à stator longitudinal, présentant une section de transport (2) le long de laquelle sont disposées une pluralité de bobines d'entraînement (3), et comprenant au moins une unité de transport (Tn) mobile le long de la section de transport (2), des aimants d'entraînement (4) de l'unité de transport (Tn) coopérant avec les bobines d'entraînement (3) de la section de transport (2) pour générer une force de propulsion (FV), **caractérisé en ce que** le dispositif présente au moins :

   - une bobine de mesure (M) qui peut être sélectionnée parmi la pluralité de bobines d'entraînement (3) disposées le long de la section de transport (2) ;
   - une unité de régulation (RE), qui est conçue pour prédéfinir une variable manipulée (SG) en tant que signal d'excitation de la bobine de mesure (M) de telle sorte que le courant de bobine de courant respectif ($i_{pH}$) soit régulé à une valeur de consigne prédéfinie ($i_{soll}$) ;
   - une unité (EE) de détection d'un profil temporel de la variable manipulée (SG) ; et
   - une unité d'évaluation (AW) pour évaluer le profil temporel de la variable manipulée (SG).

12. Dispositif selon la revendication 11, **caractérisé en ce qu'**un régulateur d'entraînement (5) associé à la bobine d'entraînement (3) sélectionnée en tant que bobine de mesure (M) peut être utilisé en tant qu'unité de régulation (RE).

13. Dispositif selon l'une quelconque des revendications 11 à 12, **caractérisé en ce que** l'unité (EE) de détection du profil temporel de la variable manipulée (SG) est intégrée dans l'unité de régulation (RE).

14. Dispositif selon l'une quelconque des revendications 11 à 13, **caractérisé en ce que** l'unité d'évaluation (AW) destinée à évaluer le profil temporel de la variable manipulée (SG) est conçue pour déduire un profil temporel d'un flux magnétique ($\Psi$) à partir du profil détecté de la variable manipulée (SG).

Fig. 1

## Fig. 2

## Fig. 3

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013143783 A1
- US 6876107 B2
- US 20130074724 A1
- WO 2004103792 A1
- US 9202719 B2
- WO 2021105155 A1
- DE 102015102236 A1
- WO 2019238276 A1